# EUROPEAN PATENT SPECIFICATION

(11) **EP 2 686 555 B1**
(45) Date of publication and mention of the grant of the patent: **12.08.2015**
(21) Application number: 12713575.4
(22) Date of filing: 12.03.2012
(51) Int. Cl.: F04B 53/16, B29C 45/00, B29C 45/14, F01C 21/10, F04C 2/344

(54) **PLASTIC PUMP HOUSING AND MANUFACTURE THEREOF**
KUNSTSTOFFPUMPENGEHÄUSE UND HERSTELLUNG
CORPS DE POMPE EN MATIÈRE PLASTIQUE ET FABRICATION DE CE CORPS DE POMPE

(30) Priority: 14.03.2011 US 201161452304 P; 12.03.2012 US 201213417703
(43) Date of publication of application: 22.01.2014
(73) Proprietor: Standex International Corporation, Salem, NH 03079 (US)
(72) Inventor: KIMBERLIN, Robert R., Murfreesboro, TN 37128 (US); LARSON, William M., Murfreesboro, TN 37128 (US); JIANG, Jie, Nashville, TN 37204 (US); ALLOCCO, Mary E., Woodbury, TN 37190 (US)
(74) Representative: Schwabe - Sandmair - Marx
(86) International application number: PCT/US2012/028746
(87) International publication number: WO 2012/125543

(56) References cited:
- WO-A1-95/12069
- WO-A2-2010/122299
- US-A- 4 543 228
- US-A- 5 642 991
- US-A- 5 660 536
- US-A1- 2005 214 153
- US-A1- 2009 104 049
- US-B2- 6 847 140

## Description

### FIELD

This disclosure relates to the field of fluid pump manufacture. More particularly, this disclosure relates to methods for making net-shape molded plastic pump housings by utilizing molds and cores configured such that none of the fluid ports of the housing produced using the molds and cores have any intersecting geometry.

### BACKGROUND

To reduce costs associated with the manufacture of positive displacement pumps, especially those of the type used in food applications, it is desirable to utilize materials less expensive than conventional brass and stainless steel materials used to make the pump housing. Plastic materials suitable for use as a pump housing material for food applications typically must be suitable for use in high temperature conditions, which conditions often exceed 149° C (300 degrees F). The use of plastics is also advantageous to eliminate sources of lead from the pump system. In food and drinking water applications, this is a very desirable feature.

Glass filled plastics are often suitable for use in such high temperatures, however, guidelines typically associated with the use of plastics in food applications, such as those set forth by NSF International, typically limit the amount of glass fiber exposed to the surface of wetted parts, such as interior surfaces of the pump housing, to 6.45 cm² (one square inch) of exposed glass fiber or less. As a practical matter, if significant secondary machining of the plastic part is required, the level of exposed fiber will usually exceed the limit.

Conventional molds and molding techniques desire improvement in connection with the manufacture of plastic pump housings. Such molds and techniques result in housings requiring significant secondary machining, and thus are unsuited for making housings for food applications.

Accordingly, what is desired is an improved method of making a plastic housing that is suitable for food applications and, as molded is ready for use and any additional machining needed is de minimis and less than about 6.45 cm² (one square inch) of the wetted interior surface is subjected to further machining after being formed by molding.

US 5 642 991 A refers to a sliding vane pump with a plastic housing. The plastic housing is formed by injection molding and the material the plastic housing is formed of, comprises glass fiber. Parts of the plastic pump housing which have direct contact to a potable fluid are finished formed in the mold.

US 6 847 140 B2 refers to a fluid barrier for a motor rotor. A fluid impermeable barrier is provided to protect the rotor of an electric motor, wherein said impermeable barrier includes no more than two parts that are assembled onto the rotor using no more than three areas of attachment.

WO 95/12069 A1 refers to a removable relief valve seat for a positive displacement pump. The housing of said pump is fabricated from brass.

US 2009/104049 A1 refers to a sliding vane pump comprising a housing comprising an inlet in a distal portion of the housing and an outlet in a proximal portion. The pump housing can be made from polymeric material and be formed by a molding process.

### SUMMARY

The above and other needs are met by a method of making a net molded plastic pump housing having a fluid inlet port, a fluid outlet port, and a pressure relief valve port, each in flow communication with a pump cavity.

In a method according to the disclosure, the method includes the steps of: providing a first mold having an interior surface topography configured to correspond in negative to exterior topographies of a first portion of the housing and to correspond in negative to topography associated with the fluid inlet port, the fluid outlet port, and the relief valve port of the housing; providing a second molding having an interior surface topography configured to correspond in negative to exterior topographies of a second portion of the housing; providing a first core having an exterior shape configured to correspond in negative to interior topographies of a proximate portion of the cavity of the housing; and providing a second core having an exterior shape configured to correspond in negative to interior topographies of a distal portion of the cavity of the housing.

The first and second molds and the first and second cores are configured such that none of the fluid inlet port, the fluid outlet port, or the pressure relief valve port of the housing produced using the molds and cores have any intersecting geometry.

The first and second molds are assembled facing one another with the first and second cores positioned adjacent one another in an end-to-end relationship within the molds, after which plastic is introduced. After the plastic cures, the molds are pulled opposite one another and the cores are pulled opposite one another and substantially perpendicular to the pull of the molds to yield the net shape molded housing.

The resulting pump housings do not require secondary machining and may be suitable for food applications.

Also disclosed is a mold and core system for making a net molded plastic pump housing.

### BRIEF DESCRIPTION OF THE DRAWINGS

Further advantages of the disclosure are apparent by reference to the detailed description when considered in conjunction with the figures, which are not to scale so as to more clearly show the details, wherein like reference numbers indicate like elements throughout the several views, and wherein:
FIG. 1 is a front perspective view of a pump made according to the disclosure..
FIG. 2 is a front perspective view of a pump housing made according to the disclosure.
FIG. 3 is a rear perspective view of the pump housing of FIG. 2.
FIG. 4 is a cross-sectional rear-end view of the pump housing of FIG. 2.
FIG. 5 is a cross-sectional side view of the pump housing of FIG. 2.
FIGS. 6 and 7 are exploded views of molds and cores used to make the housing of FIG. 2 according to the disclosure.
FIG. 8 is a front perspective view of another embodiment of a pump made according to the disclosure.
FIG. 9 is a front perspective view of a pump housing for the pump of FIG. 8
FIG. 10 is a rear perspective view of the pump housing of FIG. 9.
FIG. 11 is a cross-sectional rear-end view of the pump housing of FIG. 9.
FIG. 12 is a cross-sectional side view of the pump housing of FIG. 9.
FIG 13 is an exploded view of molds and cores used to make the housing of FIG. 9 according to the disclosure, and FIG. 14 is an assembled view thereof.
FIG. 15 is an exploded view showing additional components of the pump.

### DETAILED DESCRIPTION

The disclosure relates to methods for manufacturing a pumps having a plastic housing that are net-shape molded. Pumps according to the disclosure are particularly suited for pumping water for use in beverages, such as for pumping water in carbonated water systems, for espresso machines, and beer cooling systems.

As used herein, "net-shape molded" means that after the housing is molded it is substantially ready for use and does not require any further significant machining or shaping or polishing, such as the type typically accomplished using computer numerical controlled (CNC) equipment. That is, the terminology "net-shape molded" as used herein will be understood to mean that the housing as molded is substantially ready for use and any additional machining is de minimis and less than about 6.45 cm² (one square inch) of the wetted interior surface is subjected to further machining after being formed by molding.

Accordingly, as the housing as molded does not require further machining, shaping, polishing, or otherwise treatment to be ready to use, the wetted surfaces are not disturbed so as to expose glass fiber to the wetted surface and render the pump unacceptable for food-grade applications. Thus, such pump housings made of glass filled plastics can be made to meet glass fiber limits such that the total glass fiber exposure is maintained at or below 6.45 cm² (1 in²) total exposure. In addition, by avoiding the need for significant further machining or the like, manufacturing costs associated with further treatment are saved.

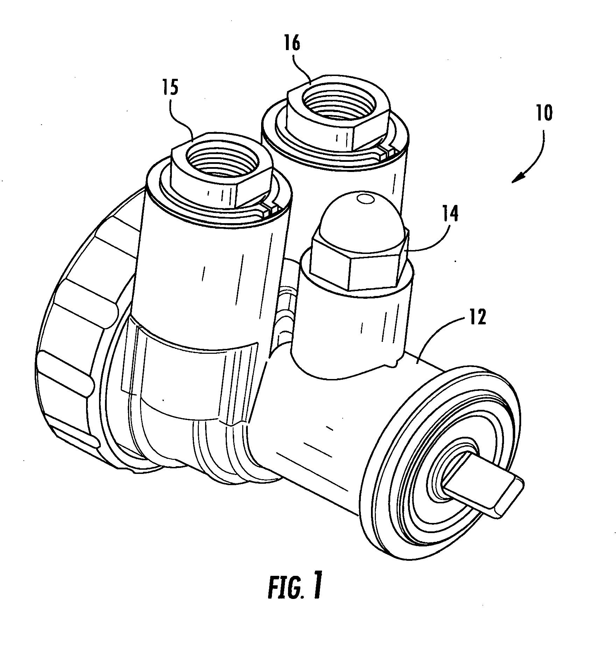

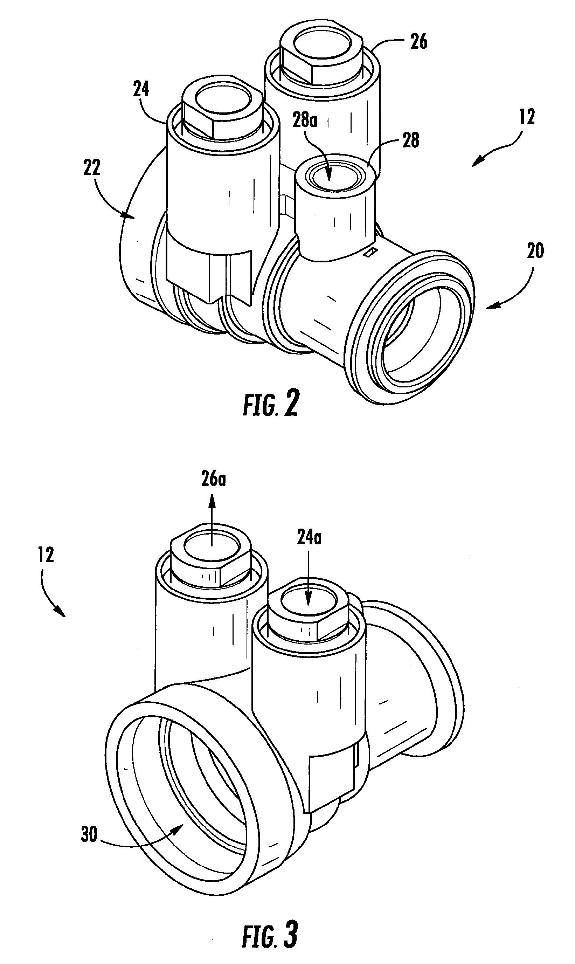

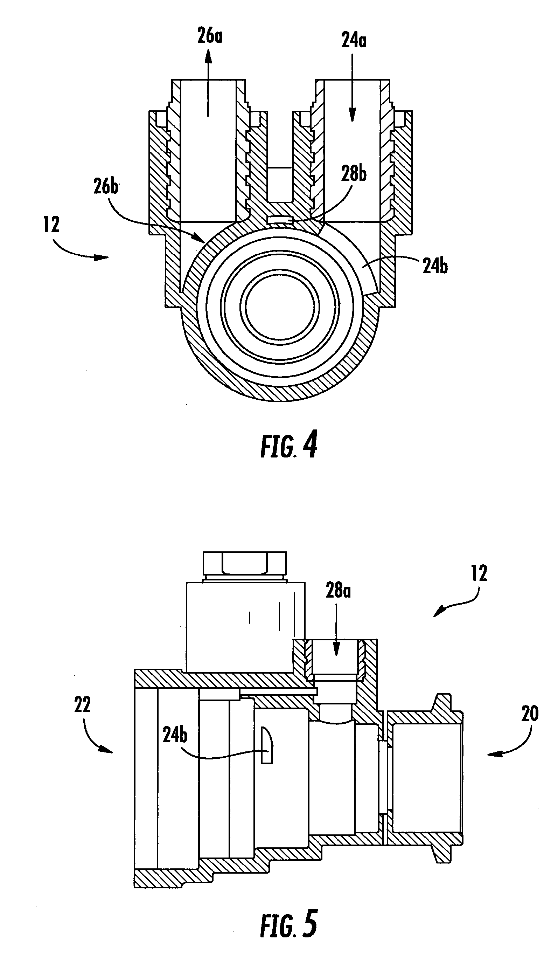

With initial reference to FIGS. 1-7, in a first embodiment the disclosure relates to a method for manufacturing a pump **10** having a plastic housing **12** that is net-shape molded. The pump 10 is, for example, configured as a positive displacement vane pump having various moving and static pump parts that cooperate with the housing 12, such as a rear cap, endplate, o-rings, bearings, seals, liner, rotor, vanes, alignment pins, snap rings, shaft, pressure relief valve **14**, port inserts **15** and **16**, washers, inlet strainer, and the like. The pump 10 is coupled, as by bolting or clamping or otherwise connecting to a pump motor, such as an integrated or external electric motor, having an output shaft.

The pump housing 12 is of one-piece molded plastic construction, and the plastic material may be reinforced with fibers such as glass fibers for added strength and temperature resistance. The housing 12 is configured to include a proximate portion **20** and a distal portion **22**. The proximate portion and the distal portion 22 define the ends of the pump cavity and are sealed as by use of caps, seals, and the like, with the proximate portion 20 adapted to be mounted onto a pump motor.

The housing 12 also includes three fluid passage ports configured for permitting desired fluid travel during operation of the pump, namely, a fluid inlet port **24** for receiving a fluid at a first pressure, a fluid outlet port **26** for expelling the fluid at a second and greater pressure, and a pressure relief valve port **28** through which fluid and pressure may escape in the event of a pressure exceeding a predetermined level. The housing 12 defines an interior pump cavity **30**, with each of the ports 24, 26, and 28 being in flow communication therewith via port entrances **24a**, **24b**, **26a**, **26b**, and **28a**, **28b**, associated with the ports 24, 26, and 28, respectively.

It has been discovered that in providing a net molded housing, it is advantageous that the molds utilized to make the housing 12 be configured such that none of the fluid passage ports, e.g., the fluid inlet port 24, the fluid outlet port 26, and the pressure relief valve port 28, have intersecting geometry. This configuration of the molds and the pump housing results from the requirement that the housing be net molded and not require more than de minimis finishing, since the ports represent complex structure that, if made with intersecting geometry, would require more than de minimis finishing.

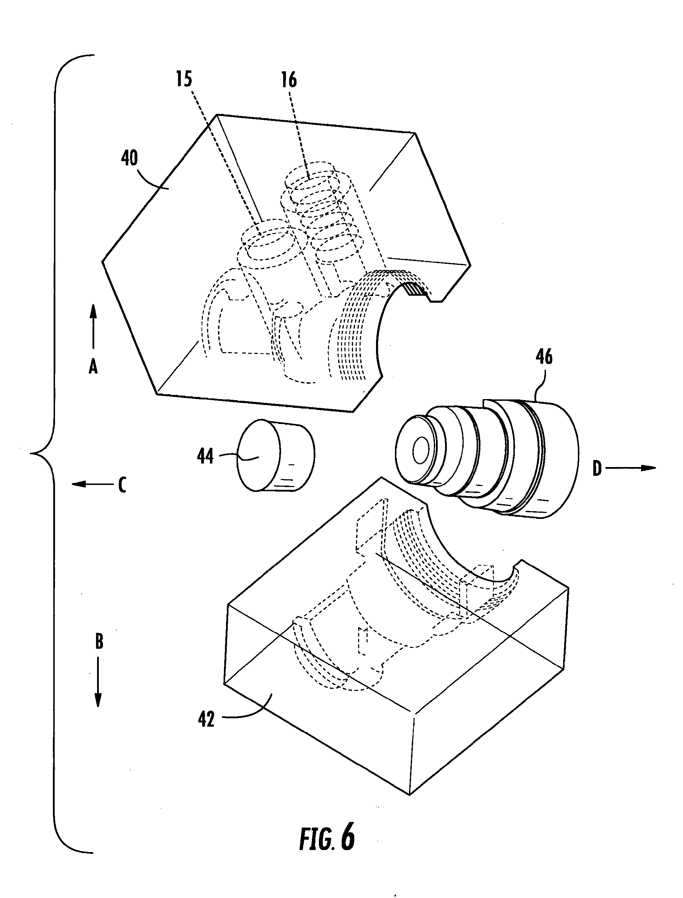

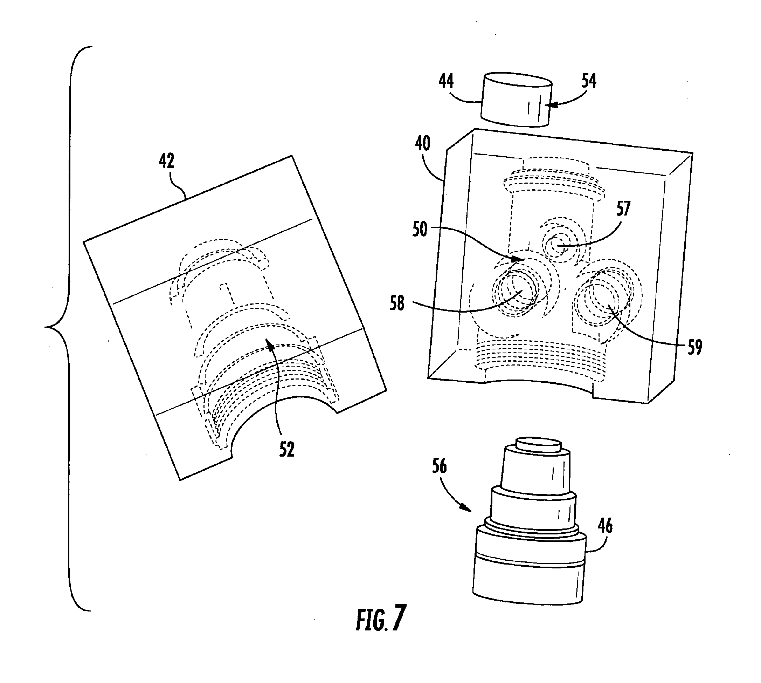

Accordingly, and with reference now to FIGS. 6 and 7, the housing 12 is manufactured utilizing an upper mold **40**, a lower mold **42**, a proximate core **44**, and a distal core **46**. The molds 40 and 42 and the cores 44 and 46 are advantageously configured such that none of the fluid passage ports, e.g., the fluid inlet port 24, the fluid outlet port 26, and the pressure relief valve port 28, of the housing 12 produced using the molds and cores have any intersecting geometry. As part of this, it will be appreciated that the cores 44 and 46 therefore do not pass through any of the fluid passage ports.

The structure of the molds and cores also facilitate a simplified molding process involving simplification in separating the molds and the cores from the molded housing 12. In this regard, it will be understood that the molds 40 and 42 are assembled facing one another with the cores 44 and 46 positioned adjacent one another in an end-to-end relationship within the molds 40 and 42, after which plastic is introduced. After the plastic cures, the molds 40 and 42 are pulled opposite one another, as indicated by the arrows **A** and **B** (FIG. 6), and the cores 44 and 46 are pulled opposite one another and substantially perpendicular to the pull of the molds 40 and 42, as indicated by the arrows **C** and **D** (FIG. 6).

The upper mold 40 has an interior surface topography **50** configured to correspond in negative to exterior topographies of an upper portion of the housing 12 and to correspond in negative to topography associated with the fluid inlet port 24, the fluid outlet port 26, and the relief valve port 28. The lower mold 42 has an interior surface topography **52** configured to correspond in negative to exterior topographies of a lower portion of the housing 12. The core 44 is solid and has an exterior shape **54** configured to correspond in negative to interior topographies of a proximate portion of the cavity 30 of the housing 12, which is substantially cylindrical. The core 46 is solid and has an exterior shape **56** configured to correspond in negative to interior topographies of a distal portion of the cavity 30 of the housing 12, which is a stepped cylindrical profile. The upper mold 40 includes rods **57**, **58**, and **59** onto which the inserts 14, 15, and 16, respectively, are slidably received.

As will be appreciated from the views, all of the portions of the mold 40 corresponding to the fluid inlet port 24, the fluid outlet port 26, and the relief valve port 28 terminate at the distal core 46, and the core 46 does not pass through any of these fluid passage ports of the housing 12. It has been discovered that this construction and configuration of the molds and cores enables the molds to be made so that the part as molded is ready for use and does not require any further machining or shaping or polishing. That is, the mold surfaces conform to the desired final shape and dimensions, with no further treatment.

In conjunction with this, it has been discovered that this feature of the mold components enables a simple mold pull procedure in which the upper and lower molds are removed by a first linear pulling motion in which the upper and lower molds are pulled away from one another, and the cores are removed by a second linear pulling motion in which the in which the proximate and distal cores are pulled in opposite directions, with the second linear pulling motion being substantially perpendicular to the first linear pulling motion.

This method of pulling the molds and the cores, as enabled by the configurations of the molds and the cores, has been observed to avoid the presence of flash, burrs, and other extraneous plastic on the molded part that would require further machining or shaping or polishing. Thus, the housing 12 molded according to the disclosure using the molds 40 and 42, and the cores 44 and 46 have been observed to be net-shape molded and to conform to the desired final shape and dimensions.

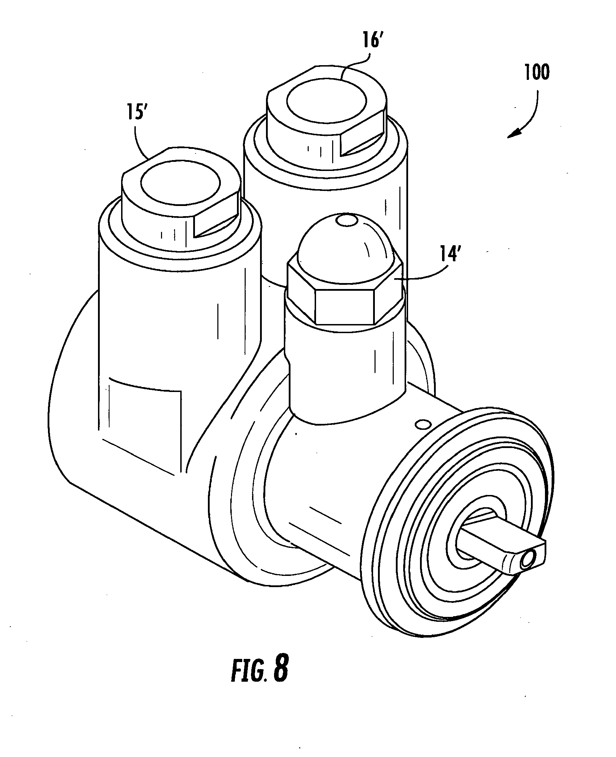

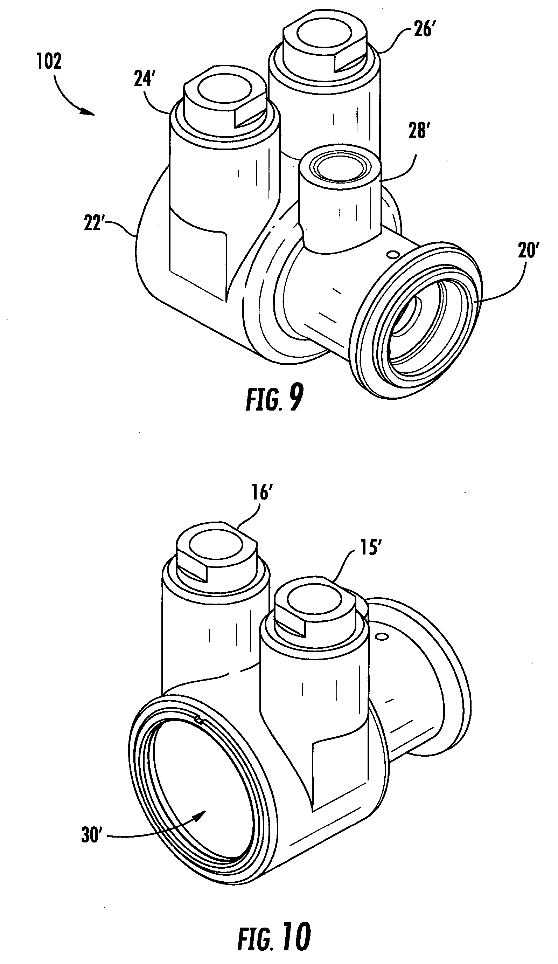

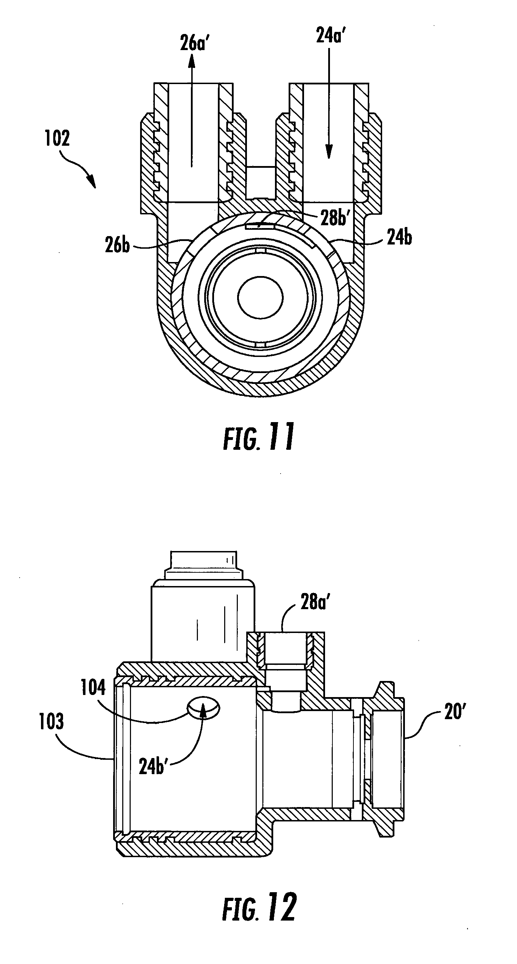

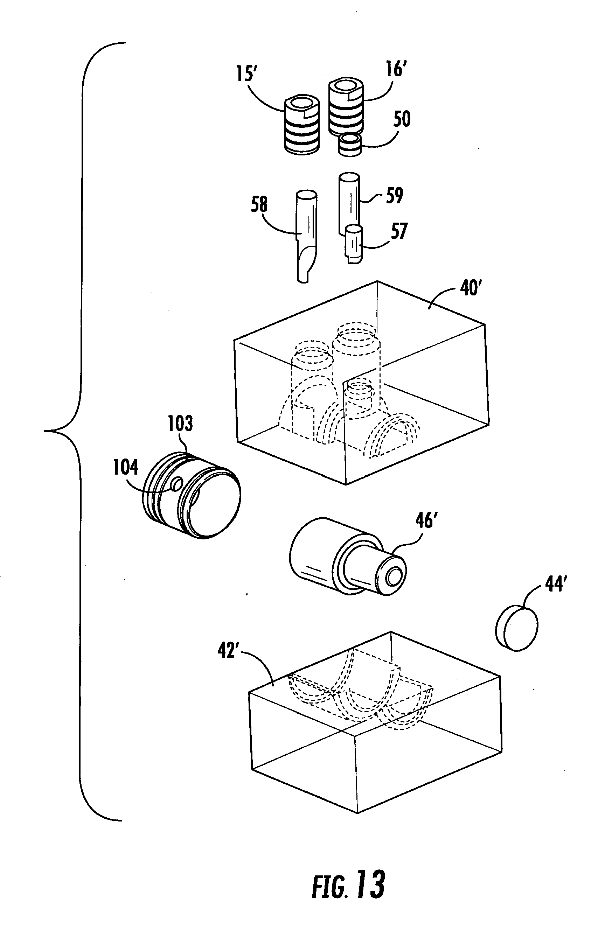

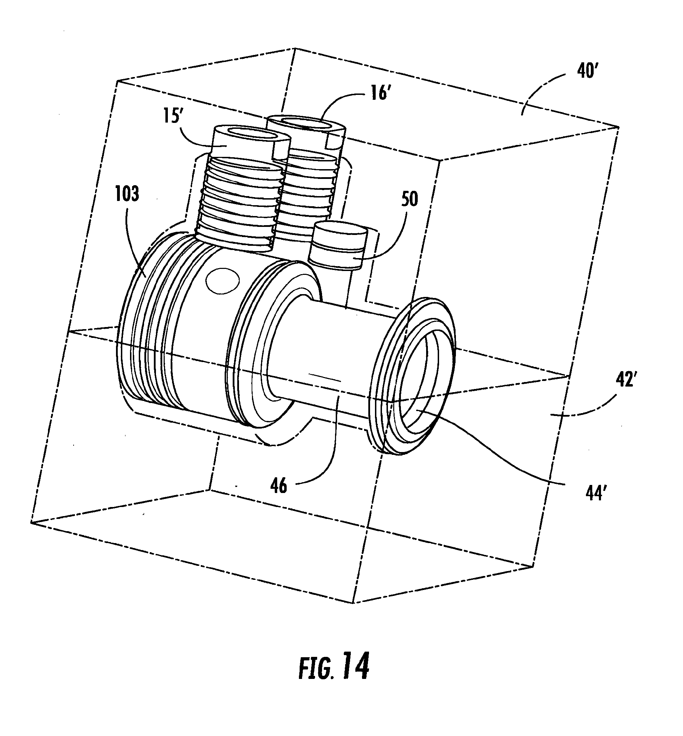

With reference now to FIGS. 8-15, a second embodiment according to the disclosure relates to a method for manufacturing a pump **100** having a plastic housing 102 that is net-shape molded. The housing 102 is substantially identical to the housing 102, except that it includes a distal bore insert **103** included during the molding. The bore insert 103 is preferably of stainless steel construction and located corresponding to the distal portion 22' of the housing 102. The insert 103 is preferably threaded. The addition of the insert 103 enables a stronger connection point than the plastic material of the housing and has been observed to provide improved operation including decreased noise during operation of the pump 100 as compared to the pump 10.

The housing 102 is made using molds 40' and 42' and cores 44' and 46'. The molds 40' and 42' and cores 44' and 46' are substantially identical to the molds 40 and 42 and cores 44 and 46, except some of the respective topographies are configured where necessary to receive the rear bore insert 103. That is, the bore insert 103 is provided to provide some of the more complex topography of the housing 102, such that the interior surfaces of the molds are simplified. In this regard, the various corresponding parts of the housing 102 and the molds 40' and 42', and cores 44' and 46' are referred to with the same numbers as the embodiment of FIGS. 1-7, except with a prime designation.

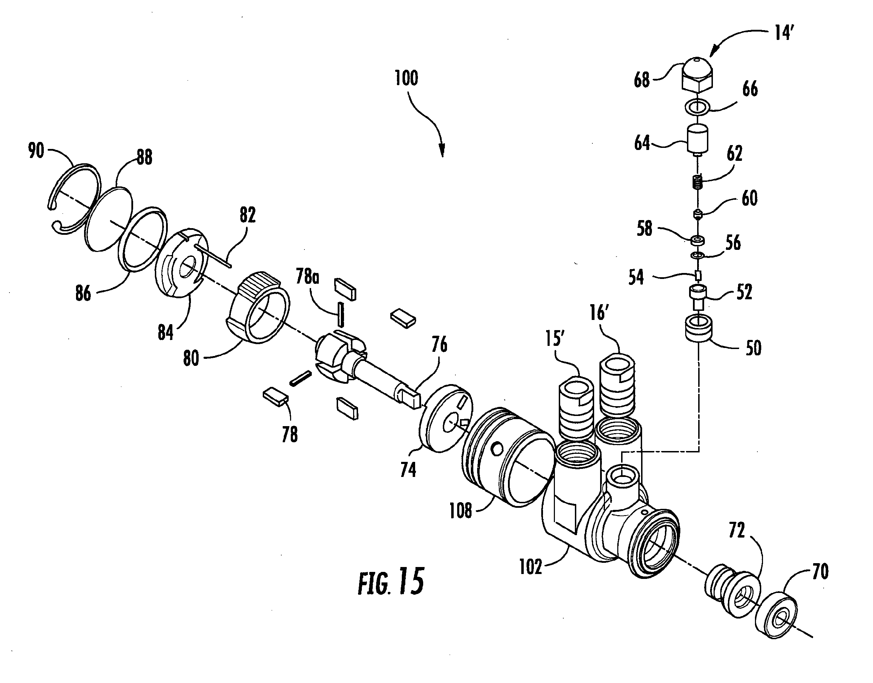

As shown in Fig. 15, the housing 102 is compatible with a variety of internal pump components to yield the pump 100. For example, as shown, the housing 102 is configured to receive the pressure valve 14' which includes valve insert **50,** valve body **52**, spring **54**, o-ring **56**, relief valve **58**, valve cover **60,** spring **62,** adjusting screw **64,** o-ring **66**, and cap **68**. Other components include ball bearing **70,** seal **72,** rear bearing **74,** rotor **76** having vanes **78** spaced apart by pins **78a,** plastic liner **80,** alignment pin **82,** front bearing **84**, o-ring **86**, plate **88**, and snap-ring **90**.

The foregoing description of preferred embodiments for this disclosure has been presented for purposes of illustration and description. It is not intended to be exhaustive or to limit the disclosure to the precise form disclosed. Obvious modifications or variations within the scope of the appended patent claims are possible in light of the above teachings. The embodiments are chosen and described in an effort to provide the best illustrations of the principles of the disclosure and its practical application, and to thereby enable one of ordinary skill in the art to utilize the disclosure in various embodiments and with various modifications, within the scope of the appended patent claims, as are suited to the particular use contemplated.

## Claims

1. A method of making a net molded plastic pump housing (12) having a fluid inlet port (24), a fluid outlet port (26), and a pressure relief valve port (28), each in flow communication with a pump cavity (30), the method comprising the steps of
providing a first mold (40) having an interior surface topography configured to correspond in negative to exterior topographies of a first portion of the housing and to correspond in negative to topography associated with the fluid inlet port (24), the fluid outlet port (26), and the relief valve port (28) of the housing (12);
providing a second mold (42) having an interior surface topography configured to correspond in negative to exterior topographies of a second portion of the housing (12);
providing a first core (44) having an exterior shape configured to correspond in negative to interior topographies of a proximate portion (20) of the cavity of the housing (12); and
providing a second core (46) having an exterior shape configured to correspond in negative to interior topographies of a distal portion (22) of the cavity of the housing (12);
wherein the first and second molds (40; 42) and the first and second cores (44; 46) are configured such that none of the fluid inlet port (24), the fluid outlet port (26), or the pressure relief valve port (28) of the housing (12) produced using the molds (40; 42) and cores (44; 46) have any intersecting geometry,
wherein the first and second molds (40; 42) are assembled facing one another with the first and second cores (44; 46) positioned adjacent one another in an end-to-end relationship within the molds (40; 42), after which plastic is introduced, and
wherein after the plastic cures, the molds (40; 42) are pulled opposite one another and the cores (44; 46) are pulled opposite one another and substantially perpendicular to the pull of the molds (40; 42) to yield the net shape molded housing (12).

2. The method of claim 1, wherein the plastic comprises glass-filled plastic.

3. The method of claim 1, wherein the net-mold nature of the housing (12) eliminates the need for more than de minimis secondary machining such that the total glass fiber exposure is maintained at or below 6.45 cm² (1 in²) total exposure.

4. The method of claim 1, wherein the housing (12) is a housing for use with a positive displacement vane pump (10).

5. The method of claim 1, further comprising a distal bore insert (103) located adjacent the second core (46) proximate the distal portion (22) of the cavity of the housing (12).

6. The method of claim 5, wherein the distal bore insert (103) is threaded.

7. A mold and core system for implementing the method of anyone of claims 1 to 6, the mold and core system comprising:
a first mold (40) having an interior surface topography configured to correspond in negative to exterior topographies of a first portion of the pump housing (12) and to correspond in negative to topography associated with the fluid inlet port (24), the fluid outlet port (26), and the relief valve port (28) of the housing (12);
a second mold (42)having an interior surface topography configured to correspond in negative to exterior topographies of a second portion of the housing (12);
a first core (44) having an exterior shape configured to correspond in negative to interior topographies of a proximate portion (20) of the cavity of the housing (12); and
a second core (46) having an exterior shape configured to correspond in negative to interior topographies of a distal portion (22) of the cavity of the housing (12);
wherein the first and second molds (40; 42) and the first and second cores (44; 46) are configured such that none of the fluid inlet port (24), the fluid outlet port (26), or the pressure relief valve port (28) of the housing (12) produced using the molds (40; 42) and cores (44; 46) have any intersecting geometry.

## Patentansprüche

1. Ein Verfahren zur Herstellung eines fertig gegossenen Pumpengehäuses (12) aus Kunststoff, mit einer Fluideinlassöffnung (24), einer Fluidauslassöffnung (28), und einer Druckablassventilöffnung (28), die alle in einer Fluidverbindung mit einem Pumpenhohlraum (30) stehen, wobei das Verfahren die Schritte umfasst:
es wird eine erste Gussform (40) bereitgestellt, die eine innerer Oberflächentopographie hat, die so gestaltet ist, dass eine Negativkopie der inneren Oberflächentopographie äußeren Topographien eines ersten Bereichs des Gehäuses und die Negativkopie einer Topographie, die mit der Einlassöffnung (24), der Auslassöffnung (26), und der Ablassventilöffnung (28) des Gehäuses verbunden ist, entspricht;
es wird eine zweite Gussform (42) bereitgestellt, mit einer Innenoberflächentopographie, die so gestaltet ist, dass eine Negativkopie der Innenoberflächentopographie äußeren Topographien eines zweiten Bereichs des Gehäuses (12) entspricht;
es wird ein erstes Kernstück (44) bereitgestellt, mit einer Außenform, die so gestaltet ist, dass eine Negativkopie der Außenform inneren Topographien eines anschließenden Bereichs (20) des Hohlraums des Gehäuses entspricht;
es wird ein zweites Kernstück (46) bereitgestellt mit einer Außenform, die so gestaltet ist, dass ein Negativ der Außenform einer inneren Topographie eines weiter weg liegenden Bereichs (22) des Hohlraums des Gehäuses entspricht;
wobei die erste und die zweite Gussform (40, 42) und das erste und das zweite Kernstück (44, 46) so gestaltet sind, dass keines von Fluideinlassöffnung (24), Fluidauslassöffnung (26) oder Druckentlastungsventilöffnung (28) des Gehäuses (12), das mittels der Gussformen (40, 42) und der Kernstücke (44, 46) hergestellt wurde, irgendeine sich überschneidende Geometrie haben;
wobei die erste und die zweite Gussform (40, 42) einander zugewandt zusammengebaut, und das erste und das zweite Kernstück (44, 46) innerhalb der Gussformen (40, 42) nebeneinander als durchgehende Anordnung angeordnet sind, und danach Kunststoff eingeführt wird, und
wobei nach Aushärtung des Kunststoffes die Gussformen (40, 42) in einander entgegen gerichtete Richtungen und die Kernstücke (44, 46) in einander entgegen gerichtete Richtungen, die im Wesentlichen quer zu den Zugrichtungen der Gussformen (40, 42) verlaufen, gezogen werden, um das fertig gegossene Gehäuse (12) zu erhalten.

2. Verfahren nach Anspruch 1, wobei der Kunststoff einen mit Glas verstärkten Kunststoff umfasst.

3. Verfahren nach Anspruch 1, wobei die Art des fertig gegossenen Gehäuses (12) die Notwendigkeit von mehr als minimalen Nachbearbeitungen ausschließt, so dass eine gesamte Freilegung von Glasfiber insgesamt bei 6,45 cm² (1 in²) totaler Freilegung oder darunter gehalten wird.

4. Verfahren nach Anspruch 1, wobei das Gehäuse (12) ein Gehäuse zur Benutzung mit einer Flügelzellenverdrängerpumpe ist.

5. Verfahren nach Anspruch 1, umfassend weiterhin einen distalen Locheinsatz (103), der neben dem zweiten Kernstück (46) proximal des distalen Bereichs (22) des Hohlraums des Gehäuses (12) angeordnet ist.

6. Verfahren nach Anspruch 5, wobei der distale Locheinsatz (103) ein Gewinde aufweist.

7. System aus Gussformen und Kernstücken zum Durchführen des Verfahrens nach einem der Ansprüche 1 bis 6, das System aus Gussformen und Kernstücken umfassend:
eine erste Gussform (40), die eine innerer Oberflächentopographie hat, die so gestaltet ist, dass eine Negativkopie der inneren Oberflächentopographie äußeren Topographien eines ersten Bereichs des Pumpengehäuses (12) und die Negativkopie einer Topographie, die mit der Einlassöffnung (24), der Auslassöffnung (26), und der Ablassventilöffnung (28) des Gehäuses (12) verbunden ist, entspricht;
eine zweite Gussform (42) mit einer Innenoberflächentopographie, die so gestaltet ist, dass eine Negativkopie der Innenoberflächentopographie äußeren Topographien eines zweiten Bereichs des Gehäuses (12) entspricht;
ein erstes Kernstück (44) mit einer Außenform, die so gestaltet ist, dass eine Negativkopie der Außenform inneren Topographien eines anschließenden Bereichs (20) des Hohlraums des Gehäuses entspricht; und
ein zweites Kernstück (46) mit einer Außenform, die so gestaltet ist, dass eine Negativkopie der Außenform inneren Topographien eines weiter weg liegenden Bereichs (22) des Hohlraums des Gehäuses entspricht;
wobei die erste und die zweite Gussform (40, 42) und das erste und das zweite Kernstück (44, 46) so gestaltet sind, das keines von Fluideinlassöffnung (24), Fluidauslassöffnung (26) oder Druckentlastungsventilöffnung (28) des Gehäuses (12), das mittels der Gussformen (40, 42) und der Kernstücke (44, 46) hergestellt wurde, irgendeine sich überschneidende Geometrie haben.

## Revendications

1. Procédé de fabrication d'un boîtier de pompe (12) en matière plastique moulé de façon nette comportant un port d'entrée de fluide (24), un port de sortie de fluide (26) et un port de soupape de surpression (28), chacun en communication d'écoulement avec une cavité de pompe (30), le procédé comprenant les étapes suivantes :
mise à disposition d'un premier moule (40) ayant une topographie de surface intérieure configurée pour correspondre en négatif aux topographies extérieures d'une première partie du boîtier et pour correspondre en négatif à la topographie associée au port d'entrée de fluide (24), au port de sortie de fluide (26) et au port de soupape de surpression (28) du boîtier (12) ;
mise à disposition d'un deuxième moule (42) ayant une topographie de surface intérieure configurée pour correspondre en négatif aux topographies extérieures d'une deuxième partie du boîtier (12) ;
mise à disposition d'un premier noyau (44) ayant une forme extérieure configurée pour correspondre en négatif aux topographies intérieures de parties proches (20) de la cavité du boîtier (12) ; et
mise à disposition d'un deuxième noyau (46) ayant une forme extérieure configurée pour correspondre en négatif aux topographies intérieures d'une partie distale (22) de la cavité du boîtier (12) ;
où le premier et le deuxième moule (40 ; 42) et le premier et le deuxième noyau (44 ; 46) sont configurés de manière à ce qu'aucune des géométries du port d'entrée de fluide (24), du port de sortie de fluide (26) ou du port de soupape de surpression (28) du boîtier (12), produits en utilisant les moules (40 ; 42) et les noyaux (44 ; 46), ne s'entrecroisent ;
où le premier et le deuxième moule (40 ; 42) sont assemblés en face-à-face, le premier et le deuxième noyau (44 ; 46) étant adjacents et positionnés bout-à-bout avec les moules (40 ; 42), après quoi du plastique est introduit, et
où, après que le plastique a durci, les moules (40 ; 42) sont tirés dans des directions opposées et les noyaux (44 ; 46) sont tirés dans des directions opposées et substantiellement perpendiculaires à la direction de tirage des moules (40 ; 42) produisant ainsi le boîtier (12) moulé de façon nette.

2. Procédé selon la revendication 1, où le plastique comporte un plastique chargé de fibre de verre.

3. Procédé selon la revendication 1, où la netteté du moulage du boîtier (12) élimine le besoin de réaliser plus qu'un usinage secondaire de minimis tel que l'exposition totale de la fibre de verre est maintenue à ou en-dessous de 6,45 cm² (1 in²) d'exposition totale.

4. Procédé selon la revendication 1, où le boîtier (12) est un boîtier prévu pour être utilisé avec une pompe à palettes à déplacement positif (10).

5. Procédé selon la revendication 1, comportant en outre un insert à trou distal (103) adjacent au deuxième noyau (56) à proximité de la partie distale (22) de la cavité du boîtier (12).

6. Procédé selon la revendication 5, où l'insert à trou distal (103) est fileté.

7. Système moule-noyau pour mettre en oeuvre le procédé selon l'une quelconque des revendications 1 à 6, le système moule-noyau comportant :
un premier moule (40) ayant une topographie de surface intérieure configurée pour correspondre en négatif aux topographies extérieures d'une première partie du boîtier de pompe (12) et pour correspondre en négatif à la topographie associée au port d'entrée de fluide (24), au port de sortie de fluide (26) et au port de soupape de surpression (28) du boîtier (12) ;
un deuxième moule (42) ayant une topographie de surface intérieure configurée pour correspondre en négatif aux topographies extérieures d'une deuxième partie du boîtier (12) ;
un premier noyau (44) ayant une forme extérieure configurée pour correspondre en négatif aux topographies intérieures de parties proches (20) de la cavité du boîtier (12) ; et
un deuxième noyau (46) ayant une forme extérieure configurée pour correspondre en négatif aux topographies intérieures d'une partie distale (22) de la cavité du boîtier (12) ;
où le premier et le deuxième moule (40 ; 42) et le premier et le deuxième noyau (44 ; 46) sont configurés de manière à ce qu'aucune des géométries du port d'entrée de fluide (24), du port de sortie de fluide (26) ou du port de soupape de surpression (28) du boîtier (12), produits en utilisant les moules (40 ; 42) et les noyaux (44 ; 46), ne s'entrecroisent.
